(19) Europäisches Patentamt
European Patent Office
Office européen des brevets

(11) EP 1 171 521 B1

(12) EUROPÄISCHE PATENTSCHRIFT

(45) Veröffentlichungstag und Bekanntmachung des Hinweises auf die Patenterteilung:
**19.05.2004 Patentblatt 2004/21**

(21) Anmeldenummer: **00916923.6**

(22) Anmeldetag: **10.03.2000**

(51) Int Cl.[7]: **C08K 5/57**, C08K 5/098, C08K 3/22

(86) Internationale Anmeldenummer:
**PCT/EP2000/002132**

(87) Internationale Veröffentlichungsnummer:
**WO 2000/059997 (12.10.2000 Gazette 2000/41)**

(54) **STABILISATORKOMBINATION FÜR HALOGENHALTIGE THERMOPLASTISCHE HARZZUSAMMENSETZUNGEN**

STABILIZER COMBINATION FOR HALOGEN-CONTAINING THERMOPLASTIC RESIN COMPOSITIONS

COMBINAISON DE STABILISANTS POUR COMPOSITIONS DE RESINES THERMOPLASTIQUES HALOGENEES

(84) Benannte Vertragsstaaten:
**AT BE CH CY DE DK ES FI FR GB GR IE IT LI LU MC NL PT SE**

(30) Priorität: **31.03.1999 DE 19914798**

(43) Veröffentlichungstag der Anmeldung:
**16.01.2002 Patentblatt 2002/03**

(73) Patentinhaber: **Bärlocher GmbH**
**85716 Unterschleissheim (DE)**

(72) Erfinder:
- **ROSENTHAL, Michael**
  **D-80801 München (DE)**
- **KÜRZINGER, Alfred**
  **D-85757 Karlsfeld (DE)**
- **REITH, Walter**
  **D-85235 Odelzhausen (DE)**

(74) Vertreter: **Fiesser, Gerold Michael**
**KNH Patentanwälte**
**Kahlhöfer, Neumann, Herzog, Fiesser**
**Postfach 26 02 32**
**80059 München (DE)**

(56) Entgegenhaltungen:
**EP-A- 0 256 872**
**EP-A- 0 743 339**
**EP-A- 0 748 844**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Stabilisatorkombination für bewitterungsstabile halogenhaltige thermoplastische Harzzusammensetzungen, insbesondere auf Polyvinylchlorid - (PVC) - Basis, umfassend Calciumhydroxid und/oder Calciumoxid, gegebenenfalls oberflächenmodifiziert, eine zinnorganische Verbindung und eine Zinkverbindung.

Halogenhaltige Polymere unterliegen chemischen Abbaureaktionen durch Einwirkung von elektromagnetischer Strahlung und/oder Wärme, die zu nachhaltigen Beeinträchtigungen der Gebrauchseigenschaften führen können oder bereits zu Problemen während der Verarbeitung führen. Insbesondere neigen PVC-Formteile unter dem Einfluß von Wärme, Wasser und elektromagnetischer Strahlung zu Abbaureaktionen, die zu einer Verschlechterung vor allem der Farbe führen. Zur Verhinderung dieser unerwünschten Abbaureaktionen der Polymerketten werden in die thermoplastischen Polymermassen schon seit langem sogenannte Stabilisatoren eingearbeitet.

Für die Herstellung von Formteilen aus Hart-PVC (PVC-U), wie Fensterprofilen, technischen Profilen, Rohren und Platten, werden wegen der hohen Anforderungen, die an diese Formteile gestellt werden, und aufgrund ihrer guten stabilisierenden Eigenschaften üblicherweise schwermetallhaltige Stabilisatoren eingesetzt. Da Schwermetalle wie Blei und Cadmium aus gewerbehygienischen und umweltpolitischen Gründen zur Stabilisierung von PCV in der Diskussion sind, versucht man, diese Stabilisatoren in zunehmendem Maße durch physiologisch unbedenkliche Stabilisierungssysteme auf Basis von Calcium- oder Zinkverbindungen zu ersetzen. Falls diese Calcium- und Zinkverbindungen zusammen mit geeigneten Additiven, wie Hydrotalkiten, Zeolithen, Hydrocalumiten, Polyolen, Diketonen, Aminouracilen, Cyanuraten und Estem der phosphorigen Säure, eingesetzt werden, können damit gute Ergebnisse erzielt werden.

Calciumhydroxid als Stabilisatorkomponente für Weich-PVC (PVC-P) wird in DE-A-2935689 beschrieben, wobei als weitere Stabilisatorkomponente zwingend mindestens ein phenolisches Antioxidans notwendig ist. Aus EP-B-0394547 ist die Kombination von overbased Erdalkalicarboxylaten mit Zeolith, Calciumhydroxid und Perchloraten bekannt. Die hier beschriebene Kombination ist jedoch nur für den Einsatz in PVC-P für den Innenbereich geeignet. Dies gilt ebenso für die in DE-A-4031401 beschriebenen Stabilisatoren. In DD-A-298799 wird eine Kombination verschiedener feindisperser Calciumverbindungen, die mit Calciumstearat gecoatet werden, und Zinkseifen als Stabilisator für Weich-PVC beschrieben.

Neben den Stabilisierungssystemen auf Basis Blei und Calcium/Zink ist die Verwendung von zinnorganischen Verbindungen seit langem bekannt. In US-A-5,739,188 wird z.B. eine Stabilisatorkombination von Organozinnverbindungen mit phosphorhaltigen Verbindungen beschrieben, in US-A-5,518,662 die Mischung von Methyl- und Butylzinnverbindungen und in US-A-3,933,743 verschiedene Organozinnverbindungen mit niedrigem Zinngehalt. Überwiegend kommen flüssige schwefelhaltige Organozinnverbindungen zum Einsatz. Wegen des starken Eigengeruchs dieser Stoffe müssen bei allen Aufbereitungs- und Verarbeitungsschritten aufwendige lufthygienische Maßnahmen getroffen werden. Nachteilig beim Einsatz dieser zinnorganischen Verbindungen ist ihre im Vergleich zu Systemen auf der Basis von Blei oder Calcium/Zink geringere Bewitterungsstabilität. Diesen Nachteil versucht man durch eine stark erhöhte Pigmentkonzentration auszugleichen. Aufgrund der hohen Abrasivität der üblicherweise als Pigmente eingesetzten Titandioxidqualitäten ist ein erhöhter Verschleiß an Maschinen und Werkzeugen zu beobachten.

Der Erfindung liegt die Aufgabe zugrunde, eine Stabilisatorkombination für halogenhaltige thermoplastische Harze zur Verfügung zu stellen, die im Vergleich zu den bekannten Formulierungen eine höhere Thermostabilität aufweist und vorzugsweise für den Einsatz in PVC-U für den Außenbereich geeignet ist.

Diese Aufgabe wird erfindungsgemäß gelöst durch eine Stabilisatorkombination für halogenhaltige thermoplastische Harze, umfassend:

a) Calciumoxid und/oder Calciumhydroxid, die gegebenenfalls oberflächenmodifiziert sein können;

b) mindestens eine Zinnverbindung der allgemeinen Formel (I)

$$R_nSn(X\text{-}R')_{4-n} \qquad (I)$$

worin n 1 oder 2 ist;
die Gruppen R, die gleich oder verschieden sein können, jeweils eine geradkettige oder verzweigte Alkylgruppe mit 1 bis 22 C-Atomen bedeuten;
die Gruppen X, die gleich oder verschieden sein können, jeweils -S- oder -0- bedeuten; und.
die Gruppen R', die gleich oder verschieden sein können, jeweils eine geradkettige oder verzweigte Alkylgruppe mit 1 bis 22 C-Atomen, eine $-[C(O)]_m$-L-C(O)-O-R''-Gruppe oder eine $-[C(O)]_m$-L-O-C(O)-R''-Gruppe bedeuten, worin m 0 oder 1 ist, -L- eine divalente Verbindungsgruppe ist, die gewählt wird aus Alkylengruppen mit 1 bis 4

C-Atomen oder einer Vinylengruppe, und R" eine Alkylgruppe mit 1 bis 22 C-Atomen ist; oder
zwei (X-R')-Gruppen miteinander unter Bildung eines heterocyclischen Rings der Formel (I') oder (I") verbunden sein können

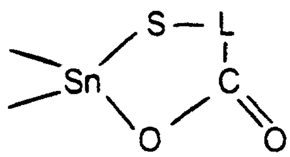

(I')

oder

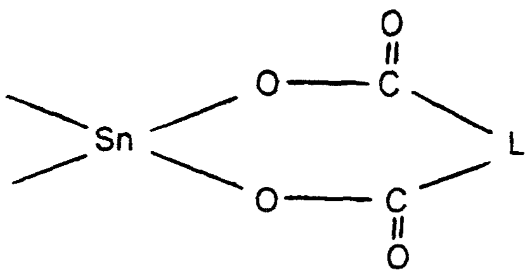

(I")

worin L wie oben definiert ist; und

c) mindestens eine Zinkverbindung, gewählt aus flüssigen und festen Zinksalzen gesättigter, ungesättigter, geradkettiger oder verzweigter ein oder mehrfunktioneller aromatischer oder aliphatischer Carbonsäuren, Zinkoxid und Zinkhydroxid;

mit der Maßgabe, daß die Stabilisatorkombination kein Perchlorat enthält.

Die vorliegende Erfindung betrifft femer eine thermoplastische Harzzusammensetzung, die mindestens ein halogenhaltiges thermoplastisches Harz und die erfindungsgemäße Stabilisatorkombination enthält.

Im folgenden wird die Erfindung mit Bezug auf bevorzugte Ausführungsformen näher beschrieben.

Das als Komponente (a) in der erfindungsgemäßen Stabilisatorkombination verwendete Calciumhydroxid und/oder Calciumoxid hat vorzugsweise eine Komgröße von höchstens 200 μm, insbesondere im Bereich von 1 bis 20 μm, bestimmt nach dem Laserbeugungsvertahren, Methode Bärlocher malve-01. Das Calciumhydroxid und/oder Calciumoxid kann gegebenenfalls oberflächen modifiziert sein. Die Oberflächenmodifizierung kann nach bekannten Verfahren und unter Verwendung üblicher Coatungsmittel erfolgen. Bevorzugte Coatungsmittel sind Fettsäuren.

Die Komponente (a) ist in der erfindungsgemäßen Stabilisatorkombination vorzugsweise in einer Menge von 0,1 - 5 Gewichtsteilen, insbesondere in einer Menge von 0,2 - 2 Gewichtsteilen, enthalten.

Bevorzugte Zinnverbindungen der allgemeinen Formel (I), die als Komponente (b) der erfindungsgemäßen Stabilisatorkombination eingesetzt werden, werden nachstehend beschrieben:

In der Formel (I) ist R vorzugsweise eine Alkylgruppe mit 1 bis 8 C-Atomen ist, die insbesondere bevorzugt eine geradkettige Alkylgruppe, beispielsweise eine Methyl-, Ethyl-, n-Propyl-, n-Butyl- oder n-Octylgruppe ist.

Gemäß einer bevorzugten Ausführungsform der Erfindung ist R' in der allgemeinen Formel (I) vorzugsweise eine Alkylgruppe mit 8 bis 18 C-Atomen oder eine $-[C(O)]_m$-L-C(O)-O-R"-Gruppe oder eine $-[C(O)]_m$-L-O-C(O)-R"-Gruppe, worin -L- eine Methylen-, Ethylen- oder Vinylengruppe und R" eine Alkylgruppe mit 6 bis 12 C-Atomen ist. Insbesondere bevorzugt ist R" eine geradkettige Alkylgruppe, beispielsweise eine n-Hexyl-, n-Heptyl-, n-Octyl-, n-Nonyl-, n-Decyl-, n-Undecyl- oder n-Dodecylgruppe.

Gemäß einer anderen bevorzugten Ausführungsform der Erfindung sind zwei (X-R')-Gruppen miteinander unter Bildung eines heterocyclischen Rings der Formel (I') oder (I") verbunden, worin -L- eine Ethylengruppe oder eine Vinylengruppe bedeutet.

Bevorzugte Beispiele für Zinnverbindungen der Formel (I) sind Methylzinn-tri(thioglycolatester), Dimethylzinn-di(thioglycolatester), n-Butylzinn-tri(thioglycolatester), Di-nbutylzinn-di(thioglycolatester), n-Octylzinn-tri(thiogylcolatester), Di-n-octylzinn-di(thioglycolatester), reverse Methylzinn-tri(thioester), reverse Dimethyizinn-di(thioester), Di-n-butylzinn-thiopropionat, Di-n-butylzinn-maleat, Di-n-butylzinn-di(maleinsäureester), Di-n-octytzinn-di (maleinsäureester) oder Di-n-butylzinn-dimercaptide.

Insbesondere bevorzugte Zinnverbindungen der Formel (I) sind:

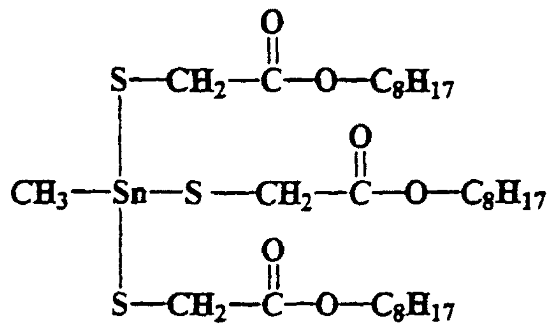

(I-1)

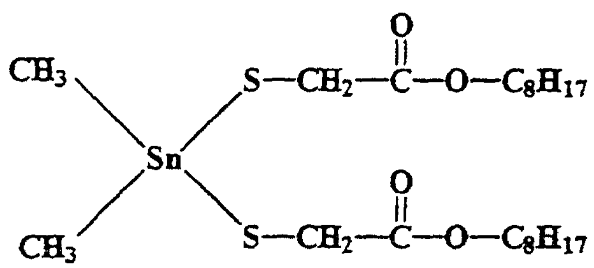

(I-2)

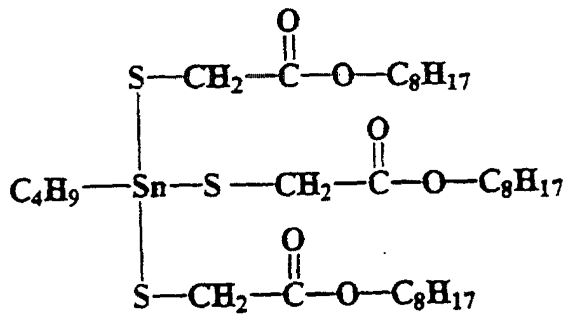

(I-3)

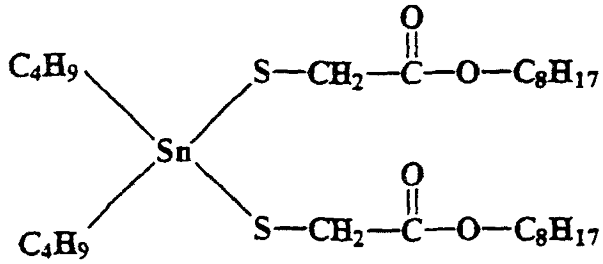

(I-4)

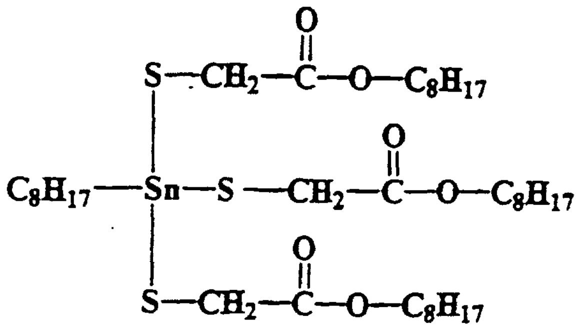

(I-5)

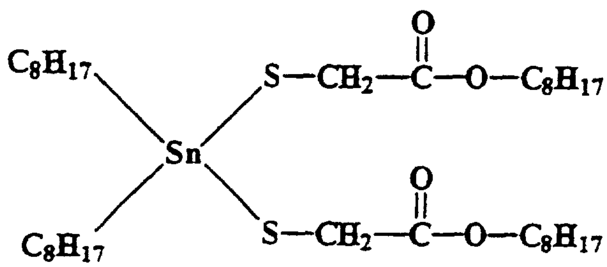

(I-6)

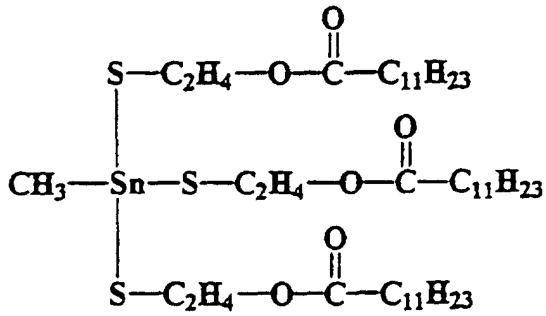

(I-7)

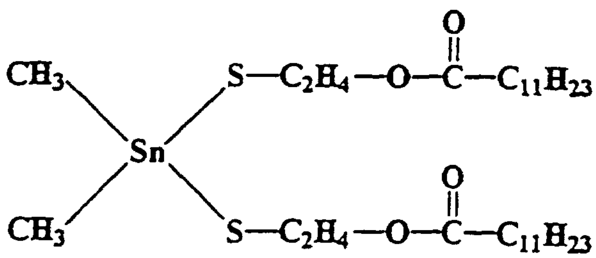

(I-8)

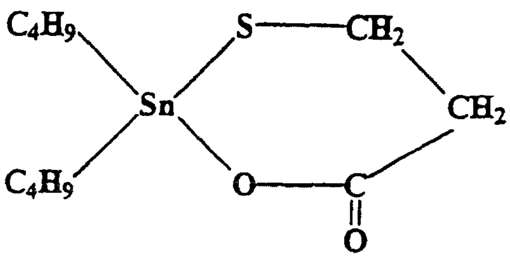

(I-9)

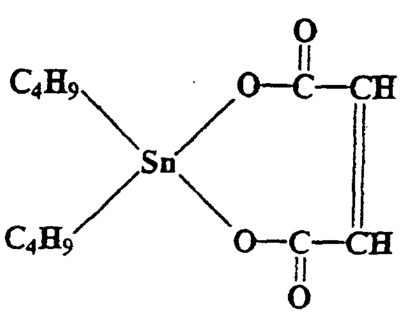

(I-10)

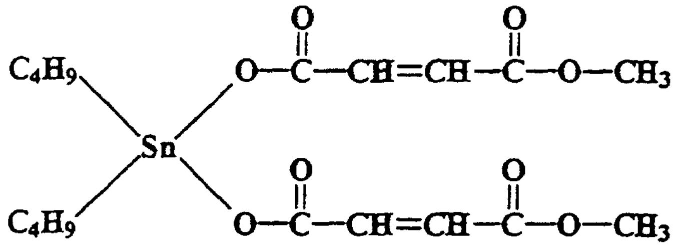

(I-11)

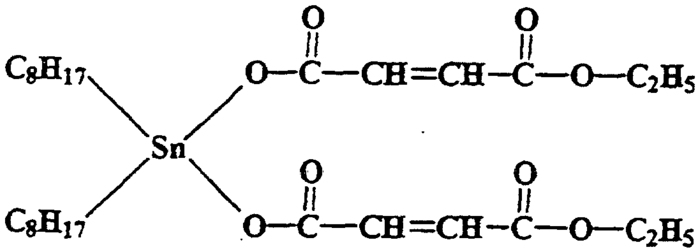

(I-12)

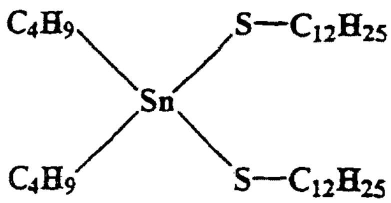

(I-13)

Die Komponente (b) ist in der erfindungsgemäßen Stabilisatorkombination vorzugsweise in einer Menge von 0,1 - 3 Gewichtsteilen, insbesondere in einer Menge von 0,2 - 2 Gewichtsteilen, enthalten.

Komponente (c) der erfindungsgemäßen Stabilisatorkombination ist mindestens eine Zinkverbindung, gewählt aus flüssigen und festen Zinksalzen gesättigter, ungesättigter, geradkettiger oder verzweigter ein. oder mehrfunktioneller aromatischer oder aliphatischer Carbonsäuren, Zinkoxid und Zinkhydroxid. Vorzugsweise wird als Komponente (c) ein Zinksalz einer gesättigten aliphatischen Carbonsäure mit 10 bis 18 C-Atomen eingesetzt. Beispiele hierfür umfassen Zinklaurat und Zinkstearat.

Die Komponente (c) ist in der erfindungsgemäßen Stabilisatorkombination vorzugsweise in einer Menge von 0,1 - 3 Gewichtsteilen, insbesondere in einer Menge von 0,5 - 1,5 Gewichtsteilen enthalten.

Die erfindungsgemäße Stabilisatorkombination wird vorzugsweise in einer Menge von 0,8 bis 5,5 Gewichtsteilen, insbesondere in einer Menge von 1,1 bis 5,5 Gewichtsteilen, bezogen auf 100 Gewichtsteile des halogenhaitigen thermoplastischen Harzes, eingesetzt.

Die erfindungsgemäße Stabilisatorkombination wird bevorzugt für Polyvinylchlorid (PVC) als halogenhaltiges thermoplastisches Harz verwendet.

Der in der vorliegenden Schrift verwendete Begriff Polyvinylchlorid umfaßt gebräuchliche Homo- und Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-Wert kann beispielsweise zwischen 50 und 100 liegen.

Es hat sich gezeigt, daß durch Verwendung einer erfindungsgemäßen Stabilisatorkombination Formkörper aus PVC-U für Außenanwendungen hergestellt werden können, die eine unerwartet hohe Thermostabilität, kombiniert mit einer excellenten Bewitterungsstabilität aufweisen.

Die erfindungsgemäße Stabilisatorkombination kann neben den oben beschriebenen Komponenten (a), (b)

und (c) noch weitere Bestandteile enthalten. Bevorzugte Beispiele für weitere Bestandteile umfassen:

(d) basische Calcium-Aiuminium-Hydroxiphosphite der allgemeinen Formel (II)

$$Ca_xAl_2(OH)_{2(x+3-y)}(HPO_3)_y \cdot m\ H_2O \qquad (II)$$

worin

$$\frac{2x+5}{2} > y > 0$$

und
$0 \leq m \leq 12$ bedeutet.
Verbindungen der allgemeinen Formel (II) werden z.B. in DE 4106411 beschrieben.

(e) basische Calcium-Aluminium-Hydroxicarboxylaten der allgemeinen Formel (III)

$$Ca_xAl_2(OH)_{[(2x+6)-y]}A_{y/n}^{n-} \cdot m\ H_2O \qquad (III)$$

worin

$$2 \leq x \leq 12,$$

$$\frac{2x+5}{2} > y > 0,$$

$$0 \leq m \leq 12,$$

und $1 \leq n \leq 8$ bedeutet, und
$A^{n-}$ ein aliphatisches gesättigtes, ungesättigtes, geradkettiges oder verzweigtes einoder mehrfunktionelles Carbonsäureanion mit 1 bis 22 Kohlenstoffatomen oder ein aromatisches oder heteroaromatisches ein- oder mehrfunktionelles Carbonsäureanion mit 6 bis 20 Kohlenstoffatomen bedeutet.

Das Carbonsäureanion $A^{n-}$ der allgemeinen Formel (III) kann beispielsweise ausgewählt werden aus Anionen der Malon-, Bemstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit-, und Zitronensäure. Bevorzugt sind die Anionen der Fumar- und Phthalsäure, insbesondere werden Fumarate eingesetzt.

Verbindungen der allgemeinen Formel (III) sind aus DE 4106404 bekannt.

(f) Polyole und/oder Disaccharidalkohole wie beispielsweise Trimethylolpropan, Di-Trimethylolpropan, Pentaerythrit, Di-Pentaerythrit, Tripentaerythrit, Polyvinylalkohol, Maltit, isomaltit, Sorbit, Mannit, Lactit, Glycerin, Diglycerin.

(g) Epoxidverbindungen auf der Basis von pflanzlichen oder tierischen Ölen, wie epoxidiertes Sojaöl oder Rapsöl, epoxidierte Fettsäureester, epoxidierte Glycidylether, Glycidylacrylat, Glycidylmethycrylat, deren Polymere und Copolymere und epoxidierte Polymere, wie epoxidiertes Polybutadien und epoxidiertes ABS.

(h) Lineare oder cyclische β-Ketoester und/oder β-Diketone und/oder Triketone und/oder deren Metallsalze;

(i) Hydrotalkite, wie beispielsweise beschrieben in DE 4425266, EP 0189899, DE 3843581, US 4,883,533, EP 0407139, DE 4031818, DE 4110835, DE 4117034, EP 0522810, DE 4439934 und US 5,352,723.

(j) Zeolithe, die beispielsweise durch die allgemeine Formel $M_x^n[(AlO_2)_x(SiO_2)_y] \cdot m\ H_2O$ beschrieben werden, worin n die Ladung des Kations M ist und n=1 oder 2 ist, M ein Alkali- oder Erdalkalimetall ist, $0{,}8 \leq x; y \leq 15$ und $0 \leq m \leq 300$ ist.

(k) Aminoverbindungen, die beispielsweise ausgewählt werden aus sterisch gehinderten Aminen (HALS), Aminocrotonsäureverbindungen, Uracilen, Aminosäuren und deren Alkali- und Erdalkalisalze.

(l) Hydrocalumite der allgemeinen Formel $AlCa_x(OH)_{(2x+3)} \cdot m\ H_2O$; x=1-4; m=0-8, die beispielsweise in DE-A-4103881 beschrieben werden.

(m) Erdalkalisalze gesättigter, ungesättigter, geradkettiger oder verzweigter ein- oder mehrfunktioneller aromatischer oder aliphatischer Carbonsäuren.

Die erfindungsgemäße Stabilisatorkombination kann außerdem mindestens ein Gleitmittel enthalten. Gleitmittel können beispielsweise ausgewählt werden aus Paraffinwachsen, Polyethylenwachsen, Polypropylenwachsen, Estergleitmitteln, mono- und/oder polyvalenten Alkoholen, Mono- und/oder Polycarbonsäuren, Amidwachsen und oxidierten Polyethylenwachsen. Gleitmittel werden entsprechend den rheologischen Erfordernissen ausgewählt.

Die erfindungsgemäße Stabilisatorkombination kann in beliebiger physikalischer Form, z.B. als Pulvermischung, Press-, Sprüh- oder Microgranulat, Schuppe oder Pastille vorliegen. Diese Produktformen können entweder aus Pulvermischungen durch Druck und/oder Temperatur und/oder durch Zugabe von Granutierhilfsmitteln in Granulatform gebracht werden oder durch Abkühlen bzw. Absprühen von Schmelzen der erfindungsgemäßen Zusammensetzung zu Schuppen, Pastillen oder Prills geformt werden. Zur Herstellung von halogenhaltigen Harzmassen können die Einzelsubstanzen direkt oder als Mischung in den o.g. Produktformen vor oder während der Verarbeitung zugegeben werden.

Die halogenhaltige thermoplastische Harzmasse kann dann in an sich bekannter Weise zu Formkörpern geformt werden.

Die erfindungsgemäße Stabilisatorkombination kann in Kombination mit üblicherweise eingesetzten Zuschlagstoffe, wie Füllstoffen (z.B. Kreide), Pigmenten (z.B. Titandioxid, Zinksulfid), Flammschulzmitteln (z.B. Magnesiumhydroxid, Aluminiumhydroxid, Antimontrioxid) Verstärkungsmitteln (z.B. Glasfasern, Talkum, Pflanzenfasern) und Weichmachem (z.B. Phthalat-, Phosphat- und/oder Polymerweichmacher, Chlorparaffine) bei der Herstellung von thermoplastischen Formmassen verwendet werden.

Die nachfolgenden Beispiele, die in den Rezepturtabellen A und B beschrieben sind, erläutem die Erfindung. In den Beispielen wird die thermische Stabilität nach DIN VDE 0472 Teil 614 (HCL-Wert) bestimmt Hier sollte ein möglichst hoher Wert erreicht werden. Die Bewertung der Bewitterungsstabilität erfolgt durch Messung des b-Wertes (CIE-LAB System) nach 24 monatiger Freibewitterung in Südfrankreich. Nachdem die Profile während des mehrtägigen Postversands nachgedunkelt waren, wurde noch eine siebentägige Freibewitterung in München angeschlossen. Eine gute Bewitterungsstabilität zeigt sich hier in einem möglichst niedrigen b-Wert, der eine nur geringe Gelbverfärbung anzeigt.

**Verarbeitung:**

Die Rezepturbestandteile wurden zusammen mit dem PVC und anderen Zuschlagstoffen in einem Heiz/Kühl-Mischer bis zu einer Aufbereitungstemperatur von 120°C gemischt und anschließend auf 40°C abgekühlt. Das so hergestellte Dryblend wurde dann mittels eines Extruders zu Profilen extrudiert.

**Beispiel A**

| | A1* | A2* | A3* | A4 | A5 | A6* | A7* | A8* | A9 | A10 |
|---|---|---|---|---|---|---|---|---|---|---|
| S-PVC | 100 | 100 | 100 | 100 | 100 | 100 | 100 | 100 | 100 | 100 |
| Kreide[1)] | 5 | 5 | 5 | 5 | 5 | 5 | 5 | 5 | 5 | 5 |
| Schlagzähmacher[2)] | 7 | 7 | 7 | 7 | 7 | 7 | 7 | 7 | 7 | 7 |
| $TiO_2$[3)] | 5 | 5 | 5 | 5 | 5 | 5 | 5 | 5 | 5 | 5 |

* Vergleichsbeispiele

1) Hydrocarb 95 T (Handelsname Fa. Omya)

2) Bärodur E-ST 3 (Handelsname Fa. Bärlocher)

3) TiPure R 101 (Handelsname Fa. DuPont)

(fortgesetzt)

| | A1* | A2* | A3* | A4 | A5 | A6* | A7* | A8* | A9 | A10 |
|---|---|---|---|---|---|---|---|---|---|---|
| Fließhilfe[4] | 1 | 1 | 1 | 1 | 1 | 1 | 1 | 1 | 1 | 1 |
| Paraffinwachs | 0,9 | 0,9 | 0,9 | 0,9 | 0,9 | 0,9 | 0,9 | 0,9 | 0,9 | 0,9 |
| Oxidiertes PE Wachs | 0,8 | 0,8 | 0,8 | 0,8 | 0,8 | 0,8 | 0,8 | 0,8 | 0,8 | 0,8 |
| Calciumstearat[5] | 1,2 | 1,2 | 1,2 | 1,2 | 1,2 | 1,2 | 1,2 | 1,2 | 1,2 | 1,2 |
| Zinkstearat[6] | -- | -- | -- | 0,25 | 0,5 | -- | -- | -- | 0,25 | 0,5 |
| Calciumhydroxid | -- | 0,5 | 1,0 | 0,25 | 0,5 | -- | 0,5 | 1,0 | 0,25 | 0,5 |
| Zinnstabilisator[7] | 1,5 | 1,0 | 0,5 | 1,0 | 0,5 | -- | -- | -- | -- | -- |
| Zinnstabilisator[8] | -- | -- | -- | -- | -- | 1,5 | 1 | 0,5 | 1,0 | 0,5 |

* Vergleichsbeispiele
[4] Bärorapid 10 F (Handelsname Fa. Bärlocher)
[5] Ceasit 1 (Handelsname Fa. Bärlocher)
[6] Zinkum 5 (Handelsname Fa. Bärlocher)
[7] Advastab TM 181 (Handelsname Fa. Morton)
[8] Bärostab M 25 S (Handelsname Fa. Bärlocher)

Tabelle 1 zeigt die b-Werte nach Bewitterung

Tabelle 1

| Probe | b-Wert |
|---|---|
| A1 | 7,2 |
| A2 | 7,5 |
| A3 | 7,7 |
| A4 | 4,6 |
| A5 | 4,1 |
| A6 | 7,1 |
| A7 | 7,6 |
| A8 | 8,0 |
| A9 | 4,3 |
| A10 | 3,9 |

Es ist offensichtlich, daß die erfindungsgemäßen Mischungen A4 - A5 bzw. A9 - A10 deutlich niedrigere Werte ergaben.

**Beispiel B**

| | B1* | B2 | B3 |
|---|---|---|---|
| S-PVC | 100 | 100 | 100 |
| Kreide[1] | 3 | 3 | 3 |
| Schlagzähmacher[9] | 7 | 7 | 7 |

* Vergleichsbeispiel
[9] Bärodus EST4 (Handelsname Fa. Bärlocher)

(fortgesetzt)

| | B1* | B2 | B3 |
|---|---|---|---|
| $TiO_2$[10) ] | 4,2 | 4,2 | 4,2 |
| Fließhilfe[11)] | 1 | 1 | 1 |
| Paraffinwachs | 0,75 | 0,75 | 0,75 |
| Oxidiertes PE Wachs | 0,15 | 0,15 | 0,15 |
| Calciumstearat | 1,5 | 0,5 | 1,0 |
| Zinkstearat[6)] | -- | 1,0 | 0,5 |
| Calciumhydroxid | -- | 1,0 | 1,0 |
| Zinnstabilisator[12)] | 1,5 | 0,5 | 1,0 |

* Vergleichsbeispiel
10) Kronos 2220 (Handelsname Fa. Kronos)
11) Bärorapid (Handelsname Fa. Bärlocher)
12) Bärostab MSO (Handelsname Fa. Bärlocher)

Tabelle 2 zeigt die HCl-Werte nach DIN VDE 0472 Teil 614

Tabelle 2

| Probe | HCl Wert (min) |
|---|---|
| B1 | 22 |
| B2 | 32 |
| B3 | 30 |

Es ist offensichtlich, daß die erfindungsgemäßen Mischungen B2 und B3 deutlich höhere Werte ergaben.

## Patentansprüche

**1.** Stabilisatorkombination für halogenhaltige thermoplastische Harze, umfassend:

a) Calciumoxid und/oder Calciumhydroxid, die gegebenenfalls oberflächenmodifiziert sein können und eine Komgröße von höchstens 200 µm aufweisen;;

b) mindestens eine Zinnverbindung der allgemeinen Formel (I)

$$R_nSn(X\text{-}R')_{4-n} \qquad (I)$$

worin n 1 oder 2 ist;
die Gruppen R, die gleich oder verschieden sein können, jeweils eine geradkettige oder verzweigte Alkylgruppe mit 1 bis 22 C-Atomen bedeuten;
die Gruppen X, die gleich oder verschieden sein können, jeweils -S- oder -O- bedeuten; und
die Gruppen R', die gleich oder verschieden sein können, jeweils eine geradkettige oder verzweigte Alkylgruppe mit 1 bis 22 C-Atomen, eine $-[C(O))_m$-L-C(O)-O-R"-Gruppe oder eine $-[C(O)]_m$-L-O-C(O)-R"-Gruppe bedeuten, worin m 0 oder 1 ist, -L- eine divalente Verbindungsgruppe ist, die gewählt wird aus Alkylengruppen mit 1 bis 4 C-Atomen oder einer Vinylengruppe, und R" eine Alkylgruppe mit 1 bis 22 C-Atomen ist; oder zwei (X-R')-Gruppen miteinander unter Bildung eines heterocyclischen Rings der Formel (I') oder (I") verbunden sein können

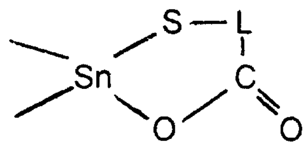

(I')

oder

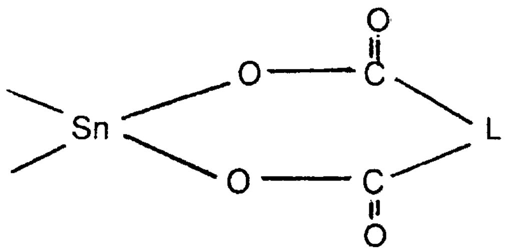

(I")

worin L wie oben definiert ist; und

c) mindestens eine Zinkverbindung, gewählt aus flüssigen und festen Zinksalzen gesättigter, ungesättigter, geradkettiger oder verzweigter ein- oder mehrfunktioneller aromatischer oder aliphatischer Carbonsäuren, Zinkoxid und Zinkhydroxid;

mit der Maßgabe, daß die Stabilisatorkombination kein Perchlorat enthält.

2. Stabilisatorkombination nach Anspruch 1, **dadurch gekennzeichnet, daß** die Komponente (a) in einer Menge von 0,1 - 5 Gewichtsteilen enthalten ist.

3. Stabilisatorkombination nach Anspruch 1 oder 2, **dadurch gekennzeichnet, daß** die Komponente (b) mindestens eine Zinnverbindung der Formel (I) ist, worin R eine Alkylgruppe mit 1 bis 8 C-Atomen ist.

4. Stabilisatorkombination nach einem der Ansprüche 1 bis 3, **dadurch gekennzeichnet, daß** die Komponente (b) mindestens eine Zinnverbindung der Formel (I) ist, worin R' eine Alkylgruppe mit 8 bis 18 C-Atomen oder eine -[C(O)]$_m$-L-C(O)-O-R"-Gruppe oder eine -[C(O)]$_m$ L-O-C(O)-R"-Gruppe ist, worin -L- eine Methylen-, Ethylen- oder Vinylengruppe und R" eine Alkylgruppe mit 6 bis 12 C-Atomen ist.

5. Stabilisatorkombination nach einem der Ansprüche 1 bis 3, **dadurch gekennzeichnet, daß** die Komponente (b) mindestens eine Zinnverbindung der Formel (I) ist, worin zwei (X-R')-Gruppen miteinander unter Bildung eines heterocyclischen Rings der Formel (I') oder (II") verbunden, worin -L- eine Ethylengruppe oder eine Vinylengruppe bedeutet.

6. Stabilisatorkombination nach einem der Ansprüche 1 bis 5, **dadurch gekennzeichnet, daß** die Komponente (b) in einer Menge von 0,1 - 3 Gewichtsteilen enthalten ist.

7. Stabilisatorkombination nach einem der Ansprüche 1 bis 6, **dadurch gekennzeichnet, daß** die Komponente (c) ein Zinksalz einer gesättigten aliphatischen Carbonsäure mit 10 bis 18 C-Atomen ist.

8. Stabilisatorkombination nach einem der Ansprüche 1 bis 7, **dadurch gekennzeichnet, daß** die Komponente (c) in einer Menge von 0,1 - 3 Gewichtsteilen enthalten ist.

9. Thermoplastische Harzzusammensetzung, enthaltend mindestens ein halogenhaltiges thermoplastisches Harz und eine Stabilisatorkombination nach einem der Ansprüche 1 bis 8.

10. Thermoplastische Harzzusammensetzung nach Anspruch 9, **dadurch gekennzeichnet, daß** das halogenhaltige thermoplastische Harz Polyvinylchlorid ist.

**11.** Verwendung der Stabilisatorkombination nach einem der Ansprüche 1 bis 8 zur Stabilisierung von halogenhaltigen thermoplastischen Harzen.

**12.** Verwendung nach Anspruch 11 zur Stabilisierung von Polyvinylchlorid (PVC).

**13.** Verwendung nach Anspruch 12 zur Stabilisierung von Hart-PVC (PVC-U).

## Claims

**1.** Stabiliser combination for halogen-containing thermoplastic resins, comprising:

a) calcium oxide and/or calcium hydroxide, which can optionally be surface modified and have a particle size of at most 200 µm;

b) at least one tin compound of general formula (I)

$$R_nSn(X\text{-}R')_{4-n} \qquad (I)$$

wherein n is 1 or 2;
the groups R, which can be the same or different, represent respectively a straight chain or branched alkyl group with 1 to 22 C atoms;
the groups X, which can be the same or different, represent respectively -S- or -O- and
the groups R', which can be the same or different, represent respectively a straight chain or branched alkyl group with 1 to 22 C atoms, a $-[C(O)]_m$-L-C(O)-O-R" group or a $-[C(O)]_m$-L-O-C(O)-R" group, wherein m is 0 or 1, -L- is a divalent linking group, which is selected from alkylene groups with 1 to 4 C atoms or a vinylene group, and R" is an alkyl group with 1 to 22 C atoms; or
two (X-R') groups can be joined together via formation of a heterocyclic ring of formula (I') or (I")

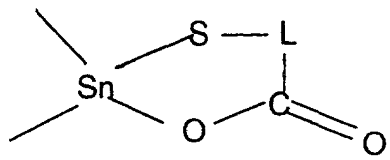

(I')

or

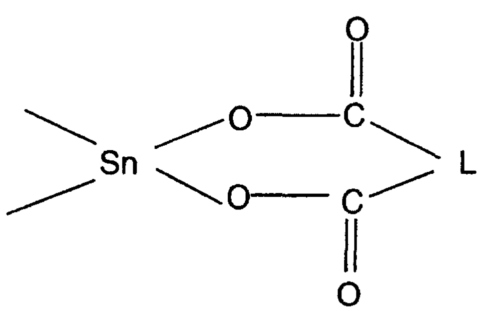

(I")

wherein L is as defined above; and

c) at least one zinc compound, selected from liquid and solid zinc salts of saturated, unsaturated, straight chain or branched single- or multiple-functional aromatic or aliphatic carboxylic acids, zinc oxide and zinc hydroxide;

with the provision that the stabiliser combination contains no perchlorate.

2. Stabiliser combination according to claim 1, **characterised in that** the component (a) is included in an amount of 0.1 - 5 parts by weight.

3. Stabiliser combination according to claim 1 or 2, **characterised in that** the component (b) is at least a tin compound of formula (I), wherein R is an alkyl group with 1 to 8 C atoms.

4. Stabiliser combination according to one of claims 1 to 3, **characterised in that** the component (b) is at least a tin compound of formula (I), wherein R' is an alkyl group with 8 to 18 C atoms or a $-[C(O)]_m$-L-C(O)-O-R" group or a $-[C(O)]_m$ L-O-C(O)-R" group, wherein -L- is a methylene, ethylene or vinylene group and R" is an alkyl group with 6 to 12 C atoms.

5. Stabiliser combination according to one of claims 1 to 3, **characterised in that** the component (b) is at least a tin compound of formula (I), wherein two (X-R') groups are joined together via formation of a heterocyclic ring of formula (I') or (I"), wherein -L- represents an ethylene group or a vinylene group.

6. Stabiliser combination according to one of claims 1 to 5, **characterised in that** the component (b) is included in an amount of 0.1 - 3 parts by weight.

7. Stabiliser combination according to one of claims 1 to 6, **characterised in that** the component (c) is a zinc salt of a saturated aliphatic carboxylic acid with 10 to 18 C atoms.

8. Stabiliser combination according to one of claims 1 to 7, **characterised in that** the component (c) is included in an amount of 0.1 - 3 parts by weight.

9. Thermoplastic resin composition, containing at least a halogen-containing thermoplastic resin and a stabiliser combination according to one of claims 1 to 8.

10. Thermoplastic resin composition according to claim 9, **characterised in that** the halogen-containing thermoplastic resin is polyvinylchloride.

11. Use of the stabiliser combination according to one of claims 1 to 8 for stabilisation of halogen-containing thermoplastic resins.

12. Use according to claim 11 for stabilisation of polyvinylchloride (PVC).

13. Use according to claim 12 for stabilisation of rigid PVC (PVC-U).

**Revendications**

1. Association de stabilisants pour des résines thermoplastiques halogénées comportant :

a) de l'oxyde de calcium et/ou de l'hydroxyde de calcium qui le cas échéant peuvent être modifiés à la surface et avoir une dimension de grain d'au maximum 200 µm ;

b) au moins un composé d'étain ayant la formule générale (I)

$$R_nSn(X\text{-}R')_{4-n}$$

dans laquelle n est 1 ou 2 ;
les groupes R, qui peuvent être égaux ou différents, signifient respectivement un groupe alkyle à chaîne linéaire ou un groupe alkyle ramifié avec 1 à 22 atomes de carbone ;
les groupes X, qui peuvent être égaux ou différents, signifient respectivement -S- ou -O- ; et
les groupes R', qui peuvent être égaux ou différents, signifient respectivement un groupe alkyle à chaîne linéaire ou un groupe alkyle ramifié avec 1 à 22 atomes de C, un groupe $-[C(O)]_m$-L-C(O)-O-R" ou un groupe

$-[C(O)]_m-L-O-C(O)-R''$, dans lequel m est 0 ou 1, L est un groupe de composé divalent qui est choisi de groupes alkylènes avec 1 à 4 atomes de C ou d'un groupe vinylidène, et R" est un groupe alkyle avec 1 à 22 atomes de C ; ou deux groupes (X-R') peuvent être reliés entre eux en formant un cycle hétérocyclique ayant la formule (I') ou (I")

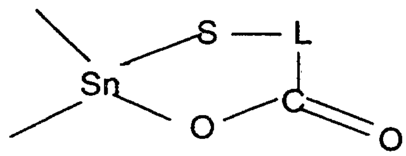

(I')

ou

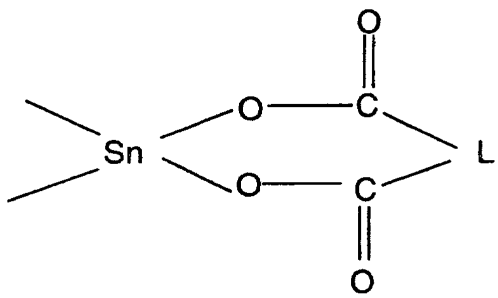

(I")

dans laquelle L est comme défini ci-dessus ; et

c) au moins un composé de zinc, choisi de sels liquides et solides de zinc d'acides carboniques mono-fonctionnels ou multifonctionnels aromatiques ou aliphatiques saturés, insaturés, à chaînes linéaires ou ramifiées, de l'oxyde de zinc et de l'hydroxyde de zinc ;

à condition que l'association de stabilisants ne contienne par de perchlorate.

**2.** Association de stabilisants selon la revendication 1, **caractérisée en ce que** la composante (a) est comprise dans une quantité de 0,1 - 5 parties en poids.

**3.** Association de stabilisants selon la revendication 1 ou 2, **caractérisée en ce que** la composante (b) est au moins un composé d'étain ayant la formule (I), dans laquelle R est un groupe alkyle avec 1 à 8 atomes de carbone.

**4.** Association de stabilisants selon l'une des revendications 1 à 3, **caractérisée en ce que** la composante (b) est au moins un composé d'étain ayant la formule (I), dans laquelle R' est un groupe alkyle avec 8 à 18 atomes de carbone ou un groupe $-[C(O)]_m-L-C(O)-O-R''$ ou un groupe $-[C(O)]_m-L-O-C(O)-R''$, dans lequel -L- est un groupe méthylène, éthylène ou vinylène et R" un groupe alkyle avec 6 à 12 atomes de carbone.

**5.** Association de stabilisants selon l'une des revendications 1 à 3, **caractérisée en ce que** la composante (b) est au moins un composé d'étain ayant la formule (I), dans laquelle deux groupes (X-R') sont reliés entre eux pour former un cycle hétérocyclique ayant la formule (I') ou (II"), dans laquelle -L- signifie un groupe éthylène ou un groupe vinylène.

**6.** Association de stabilisants selon l'une des revendications 1 à 5, **caractérisée en ce que** la composante (b) est comprise dans une quantité de 0,1 - 3 parties en poids.

7. Association de stabilisants selon l'une des revendications 1 à 6, **caractérisée en ce que** la composante (c) est un sel de zinc d'un acide carbonique aliphatique saturé avec 10 à 18 atomes de carbone.

8. Association de stabilisants selon l'une des revendications 1 à 7, **caractérisée en ce que** la composante (c) est comprise dans une quantité de 0,1 - 3 parties en poids.

9. Composition de résine thermoplastique comportant au moins une résine thermoplastique halogénée et une association de stabilisants selon l'une des revendications 1 à 8.

10. Composition de résine thermoplastique selon la revendication 9, **caractérisée en ce que** la résine thermoplastique halogénée est du chlorure de polyvinyle.

11. Utilisation de l' association de stabilisants selon l'une des revendications 1 à 8 pour stabiliser des résines thermoplastiques halogénées.

12. Utilisation selon la revendication 11 pour stabiliser du chlorure de polyvinyle (PVC).

13. Utilisation selon la revendication 12 pour stabiliser du PVC dur (PVC-U).